# FASCICULE DE BREVET EUROPEEN

(11) **EP 2 288 426 B1**
(45) Date de publication et mention de la délivrance du brevet: **12.02.2020**
(21) Numéro de dépôt: 09735495.5
(22) Date de dépôt: 21.04.2009
(51) Int. Cl.: B01D 53/34, B01J 21/06, B01J 23/00, B01J 23/10, F01N 3/00, B01D 53/94

(54) **COMPOSITIONS CATALYTIQUES À BASE D'OXYDES DE ZIRCONIUM, DE CERIUM ET D'YTTRIUM ET LEURS UTILISATIONS POUR LES TRAITEMENT DES GAZ D'ÉCHAPPEMENT.**
KATALYTISCHE ZUSAMMENSETZUNGEN BESTEHEND AUS ZIRKONIUM-, CER- UND YTTRIUMOXIDEN UND IHRE VERWENDUNG ZUR BEHANDLUNG VON ABGASEN.
COMPOSITION CONTAINING ZIRCONIUM, CERIUM AND YTTRIUM OXIDES HAVING A HIGH REDUCIBILITY, METHOD FOR PREPARING SAME AND USE THEREOF IN CATALYSIS

(30) Priorité: 23.04.2008 FR 0802272
(43) Date de publication de la demande: 02.03.2011
(73) Titulaire: Rhodia Opérations, 93306 Aubervilliers (FR)
(72) Inventeur: LARCHER, Olivier, Pennington NJ 08534 (US); ROHART, Emmanuel, F-17220 Sainte Soulle (FR); IFRAH, Simon, F - 17140 Lagord (FR)
(74) Mandataire: Senninger, Thierry
(86) Numéro de dépôt international: PCT/EP2009/054715
(87) Numéro de publication internationale: WO 2009/130202

(56) Documents cités:
- JP-A- 2000 176 282
- US-A1- 2008 090 723

## Description

La présente invention concerne une composition à base d'oxydes de zirconium, de cérium, d'yttrium et d'une autre terre rare, ses procédés de préparation et son utilisation en catalyse, notamment pour le traitement des gaz d'échappement d'automobile.

On utilise à l'heure actuelle pour le traitement des gaz d'échappement des moteurs à combustion interne (catalyse postcombustion automobile) des catalyseurs dits multifonctionnels. Par multifonctionnels, on entend les catalyseurs capables d'opérer non seulement l'oxydation en particulier du monoxyde de carbone et des hydrocarbures présents dans les gaz d'échappement mais également la réduction en particulier des oxydes d'azote également présents dans ces gaz (catalyseurs "trois voies"). L'oxyde de zirconium et l'oxyde de cérium apparaissent aujourd'hui comme deux constituants particulièrement importants et intéressants pour ce type de catalyseurs. Plus précisément, une qualité requise pour ces oxydes ou constituants est leur réductibilité. On entend par réductibilité, ici et pour le reste de la description, le taux de cérium IV dans ces constituants susceptible de se transformer en cérium III sous l'effet d'une atmosphère réductrice et à une température donnée. Cette réductibilité peut se mesurer par exemple par une consommation d'hydrogène dans un domaine de température donné. Elle est due au cérium qui a la propriété de se réduire ou de s'oxyder. Cette réductibilité doit, bien sûr, être la plus élevée possible.

En outre, il est important que cette réductibilité soit stable, c'est-à-dire qu'elle conserve une valeur suffisamment haute pour que les produits restent efficaces même après exposition de ceux-ci à des températures élevées.

Il existe donc un besoin pour des produits ayant de telles propriétés de réductibilité.

JP 2000176282 décrit une composition à base d'oxydes de cérium, de zirconium et d'yttrium qui ne comprend pas une terre rare choisie parmi le lanthane, le néodyme et le praséodyme. US 2008/0090723 décrit une composition à base d'oxydes de cérium, de zirconium et d'yttrium mais ne décrit pas une surface spécifique d'au moins 40 m²/g après calcination à 1000°C 4 heures.

Un objet de l'invention est donc la mise au point d'une composition pouvant répondre à ce besoin.

Dans ce but, la composition de l'invention est telle que décrite à la revendication 1.

Comme on le verra plus loin, les compositions de l'invention présentent une réductibilité importante à 1000°C qui peut être notamment d'au moins 90%.

D'autres caractéristiques, détails et avantages de l'invention apparaîtront encore plus complètement à la lecture de la description qui va suivre, ainsi que des divers exemples concrets mais non limitatifs destinés à l'illustrer.

Pour la suite de la description, on entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

En outre, les calcinations à l'issue desquelles sont données les valeurs de surface sont des calcinations sous air.

Les teneurs sont données en masse d'oxyde sauf indication contraire. L'oxyde de cérium est sous forme d'oxyde cérique, les oxydes des autres terres rares sous forme Ln₂O₃, Ln désignant la terre rare, à l'exception du praséodyme exprimé sous la forme Pr₆O₁₁.

On précise pour la suite de la description que, sauf indication contraire, dans les fourchettes de valeurs qui sont données, les valeurs aux bornes sont incluses.

Les compositions selon l'invention se caractérisent tout d'abord par la nature de leurs constituants.

Les compositions de l'invention comportent au moins un oxyde d'une autre terre rare qui peut être le lanthane, le néodyme ou le praséodyme. On notera ici que les combinaisons de ces terres rares entre elles rentrent bien entendu dans l'invention. On peut mentionner plus particulièrement la combinaison du lanthane et du néodyme. La description qui suit sera faite par commodité en référence à une terre rare mais cette description devra être comprise comme s'appliquant aussi aux combinaisons des terres rares précitées.

Les compositions de l'invention se caractérisent aussi par leurs teneurs en ces différents oxydes. Plus précisément, elles se caractérisent par une teneur en oxyde de cérium assez faible puisqu'elle est comprise entre 3% et 15%. Une teneur en oxyde de cérium plus élevée que 15% peut entraîner une diminution de la réductibilité, une teneur plus faible peut nuire aux propriétés catalytiques des compositions.

La teneur en oxyde d'yttrium dépend de la teneur en oxyde de cérium. Globalement, cette teneur en oxyde d'yttrium est d'autant plus faible que celle en oxyde de cérium est élevée. Ceci s'applique aussi à la teneur totale en oxydes d'yttrium et de terre rare. Les teneurs maximales en oxyde d'yttrium ou en oxydes d'yttrium et de l'autre terre rare ont été données plus haut et leur dépassement peut, là encore, entraîner une diminution de la réductibilité des compositions.

La teneur minimale en oxyde d'yttrium est d'au moins 3%, plus particulièrement d'au moins 5%.

La teneur minimale en autre terre rare est d'au moins 1%, de préférence d'au moins 2% dans le cas du néodyme et du praséodyme.

Les compositions de l'invention présentent avantageusement un taux de réductibilité élevé.

Ce taux de réductibilité peut être d'au moins 90%. Il peut être plus particulièrement d'au moins 94%. Des taux de 100% peuvent être atteints. Le taux de réductibilité donné ici est mesuré sur une composition qui a subi une calcination à 1000°C sous air pendant 4 heures en palier.

La réductibilité des compositions est déterminée par la mesure de leur consommation d'hydrogène mesurée entre 100°C et 800°C. Cette mesure est faite par réduction programmée en température en utilisant de l'hydrogène dilué dans l'argon et dans des conditions qui seront précisées plus loin. Le taux de réductibilité représente le pourcentage de cérium réduit, étant entendu qu'1/2 mole d'H₂ consommée et mesurée par cette méthode correspond à 1 mole de CelV réduit.

Les propriétés de réductibilité des compositions de l'invention sont aussi intéressantes par le fait que ces compositions présentent une température maximale de réductibilité qui peut être assez faible notamment d'au plus 550°C, plus particulièrement d'au plus 530°C. Cette température est donnée ici pour des compositions ayant été calcinées aussi 1000°C 4 heures. Cette température maximale correspond à la température à laquelle le captage de l'hydrogène est maximal et où, en d'autres termes, la réduction du cérium IV en cérium III est aussi maximale. Elle traduit en fait la température à laquelle la réductibilité et, par conséquent, l'efficacité de la composition, sont maximales. Dans le cas de l'invention, les compositions sont donc efficaces dans des gammes de températures généralement plus faibles que celles des produits connus pour lesquels cette température maximale est souvent supérieure à 550°C.

On détermine la température maximale de réductibilité aussi par la mesure de la capacité de captage de l'hydrogène en fonction de la température. Cette température correspond à la température à laquelle le captage de l'hydrogène est maximal et où, en d'autres termes, la réduction du cérium IV en cérium III est aussi maximale.

Les compositions de l'invention présentent par ailleurs des surfaces spécifiques importantes même après calcination à température élevée.

Les compositions présentent une surface spécifique après calcination 4 heures à 1000°C d'au moins 40 m²/g, de préférence d'au moins 45 m²/g et encore plus préférentiellement d'au moins 50 m²/g. Des valeurs de surface allant jusqu'à environ 60 m²/g peuvent être atteintes.

Après calcination 4 heures à 1100°C, les compositions de l'invention peuvent présenter une surface d'au moins 20 m²/g, notamment d'au moins 25 m²/g, plus particulièrement d'au moins 30 m²/g.

Après calcination 10 heures à 1200°C les surfaces spécifiques des compositions de l'invention peuvent être d'au moins 2 m²/g, plus particulièrement d'au moins 4 m²/g encore plus particulièrement d'au moins 5 m²/g.

Les compositions de l'invention présentent des propriétés cristallographiques spécifiques.

Ainsi selon un mode de réalisation particulier, les compositions de l'invention présentent une phase majoritaire de symétrie cubique ou quadratique. Dans ce cas, on peut noter que l'on n'observe pas de pic caractéristique d'oxyde de terre rare isolé, ce qui traduit l'incorporation des éléments de terre rare autre que le cérium dans la matrice cristalline de l'oxyde mixte.

Selon un autre mode de réalisation particulier les compositions de l'invention peuvent se présenter sous la forme de solutions solides pures des éléments cérium, yttrium et terre rare dans l'oxyde de zirconium.

Dans ce cas, les diagrammes en diffraction RX de ces compositions révèlent l'existence d'une phase unique et correspondant à celle d'un oxyde de zirconium cristallisé dans le système cubique ou quadratique, traduisant ainsi l'incorporation des éléments cérium, yttrium et terre rare dans le réseau cristallin de l'oxyde de zirconium, et donc l'obtention d'une solution solide vraie. Les teneurs élevées en yttrium favorisent généralement l'apparition de la phase cubique. Ce mode de réalisation, solution solide, s'applique à des compositions qui ont subi une calcination à une température aussi élevée que 1100°C et pendant 4 heures. Ceci signifie qu'après calcination dans ces conditions on n'observe pas de démixtion, c'est-à-dire l'apparition d'autres phases.

Enfin, selon un autre mode de réalisation particulier les compositions de l'invention peuvent être sous forme de particules qui présentent un gradient de concentration de l'yttrium et, éventuellement de la terre rare pour les compositions en contenant une. Dans ce cas, les particules présentent des zones enrichies en yttrium et, éventuellement, en autre terre rare.

Des procédés de préparation des compositions de l'invention vont maintenant être décrits.

Selon un premier mode de réalisation le procédé selon l'invention comprend les étapes suivantes :
- (a) on met en présence, en milieu liquide, un composé basique et des composés du zirconium, du cérium, de l'yttrium etde l'autre terre rare; ce par quoi on obtient un précipité;
- (b) on chauffe en milieu liquide ledit précipité;
- (c) on ajoute au précipité obtenu à l'étape précédente un additif, choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (d) on calcine le précipité ainsi obtenu.

L'étape (a) est conduite dans un milieu liquide qui est l'eau de préférence.

Les composés du zirconium, du cérium, de l'yttrium etde l'autre terre rare, sont de préférence des composés solubles. Ce peut être notamment des sels de ces éléments. Ces composés peuvent être choisis parmi les nitrates, les sulfates, les acétates, les chlorures, le nitrate céri-ammoniacal.

A titre d'exemples, on peut ainsi citer le sulfate de zirconium, le nitrate de zirconyle ou le chlorure de zirconyle. Le nitrate de zirconyle est utilisé le plus généralement. On peut citer aussi notamment les sels de cérium IV tels que nitrates ou nitrates céri-ammoniacaux par exemple, qui conviennent ici particulièrement bien. De préférence, on utilise du nitrate cérique. Il est avantageux d'utiliser des sels de pureté d'au moins 99,5% et plus particulièrement d'au moins 99,9%. Une solution aqueuse de nitrate cérique peut par exemple être obtenue par réaction de l'acide nitrique sur un oxyde cérique hydraté préparé d'une manière classique par réaction d'une solution d'un sel céreux, par exemple le nitrate céreux, et d'une solution d'ammoniaque en présence d'eau oxygénée.

On notera enfin que dans le cas de l'utilisation d'un composé du cérium dans lequel cet élément est sous forme III, il est préférable de faire intervenir dans le cours du procédé un agent oxydant, par exemple de l'eau oxygénée. Cet agent oxydant peut être utilisé en étant ajouté au milieu réactionnel lors de l'étape (a), notamment à la fin de celle-ci.

Il est aussi possible d'utiliser un sol comme composé de départ du zirconium ou du cérium. Par sol on désigne tout système constitué de fines particules solides de dimensions colloïdales, c'est à dire des dimensions comprises entre environ 1nm et environ 500nm, à base d'un composé de zirconium ou de cérium ce composé étant généralement un oxyde et/ou un oxyde hydraté de zirconium ou de cérium, en suspension dans une phase liquide aqueuse, lesdites particules pouvant en outre, éventuellement, contenir des quantités résiduelles d'ions liés ou adsorbés tels que par exemple des nitrates, des acétates, des chlorures ou des ammoniums. On notera que dans un tel sol, le zirconium ou le cérium peuvent se trouver soit totalement sous la forme de colloïdes, soit simultanément sous la forme d'ions et sous la forme de colloïdes.

Comme composé basique on peut utiliser les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée. Le composé basique peut être plus particulièrement utilisé sous forme d'une solution.

Les composés des éléments précités et basiques sont mis en œuvre dans les quantités suffisantes pour l'obtention de la composition que l'on cherche à préparer.

L'étape (a) peut être réalisée à partir de composés initialement à l'état solide que l'on introduira par la suite dans un pied de cuve d'eau par exemple, soit encore directement à partir de solutions de ces composés puis mélange, dans un ordre quelconque, desdites solutions.

La mise en présence entre les composés du zirconium, du cérium, de l'yttrium et de l'autre terre rare et le composé basique, peut être effectuée de manière quelconque, par exemple par l'addition d'un mélange préalablement formé des composés des éléments précités dans le composé basique sous forme d'une solution. Cette variante est préférable pour obtenir les compositions de l'invention sous forme d'une phase cubique pure. Cette mise en présence est de préférence réalisée sous agitation. Elle est de préférence conduite à température ambiante.

Selon une autre variante, on effectue l'étape (a) en deux temps. On entend par là que le composé de l'yttrium et/oucelui de l'autre terre rare peuvent être mis en œuvre dans le procédé de préparation et participer à la réaction dans un deuxième temps par rapport aux composés du zirconium et du cérium. Cette variante permet d'obtenir plus particulièrement des compositions selon le mode de réalisation particulier décrit plus haut, c'est-à-dire celles qui présentent un gradient de concentration de l'yttrium et, éventuellement de la terre rare.

Ainsi, dans un premier temps, on met en présence les composés du zirconium et du cérium et une partie du composé basique ou la totalité de celui-ci. Il est aussi possible de mettre en œuvre ici un composé de l'yttrium ou un composé de la terre rare.

Dans un deuxième temps, on met en présence avec le milieu obtenu à l'issue du premier temps l'autre partie dudit composé basique si celui-ci n'a pas été utilisé totalement précédemment et le composé de l'yttrium. On met en œuvre dans ce deuxième temps les composés d'yttrium et de l'autre terre rare si aucun d'entre eux n'a été utilisé dans le premier temps de l'étape (a) ou celui de ces deux composés qui n'a pas été mis en œuvre précédemment lors du premier temps de l'étape (a).

On obtient à l'issue de l'étape (a) un précipité en suspension dans le milieu réactionnel.

L'étape suivante (b) du procédé est l'étape de chauffage de ce précipité dans ce milieu.

Ce chauffage peut être réalisé directement sur le milieu réactionnel obtenu après réaction avec le composé basique ou sur une suspension obtenue après séparation du précipité du milieu réactionnel, lavage éventuel et remise dans l'eau du précipité. La température à laquelle est chauffé le milieu est d'au moins 100°C et encore plus particulièrement d'au moins 130°C. Elle peut être comprise par exemple entre 100°C et 160°C. L'opération de chauffage peut être conduite en introduisant le milieu liquide dans une enceinte close (réacteur fermé du type autoclave). Dans les conditions de températures données ci-dessus, et en milieu aqueux, on peut ainsi préciser, à titre illustratif, que la pression dans le réacteur fermé peut varier entre une valeur supérieure à 1 Bar (10⁵ Pa) et 165 Bar (1,65. 10⁷ Pa), de préférence entre 5 Bar (5. 10⁵ Pa) et 165 Bar (1,65. 10⁷ Pa). On peut aussi effectuer le chauffage dans un réacteur ouvert pour les températures voisines de 100°C.

Le chauffage peut être conduit soit sous air, soit sous atmosphère de gaz inerte, de préférence l'azote.

La durée du chauffage peut varier dans de larges limites, par exemple entre 1 et 48 heures, de préférence entre 2 et 24 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.

Il est possible de faire plusieurs chauffages. Ainsi, on peut remettre en suspension dans l'eau, le précipité obtenu après l'étape de chauffage et éventuellement un lavage puis effectuer un autre chauffage du milieu ainsi obtenu. Cet autre chauffage se fait dans les mêmes conditions que celles qui ont été décrites pour le premier.

L'étape suivante (c) du procédé consiste à ajouter au précipité issu de l'étape précédente un additif qui est choisi parmi les tensioactifs anioniques, les tensioactifs non ioniques, les polyéthylène-glycols et les acides carboxyliques et leurs sels ainsi que les tensioactifs du type éthoxylats d'alcools gras carboxyméthylés.

En ce qui concerne cet additif on pourra se référer à l'enseignement de la demande WO-98/45212 et utiliser les tensioactifs décrits dans ce document.

On peut mentionner comme tensioactifs du type anionique les éthoxycarboxylates, les acides gras éthoxylés, les sarcosinates, les esters phosphates, les sulfates comme les sulfates d'alcool les sulfates d'éther alcool et les éthoxylates d'alcanolamide sulfatés, les sulfonates comme les sulfosuccinates, les alkyl benzène ou alkyl naphtalène sulfonates.

Comme tensioactif non ionique on peut mentionner les tensioactifs acétyléniques, les éthoxylates d'alcool, les alcanolamides, les oxydes d'amine, les alcanolamides éthoxylés, les amines éthoxylées à longues chaînes, les copolymères oxyde d'éthylène/oxyde de propylène, les dérivés du sorbiatan, l'éthylène glycol, le propylène glycol, le glycérol, les esters polyglyceryle et leurs dérivés éthoxylés, les alkylamines, les alkylimidazolines, les huiles éthoxylées et les éthoxylates d'alkylphénol. On peut citer notamment les produits vendus sous les marques IGEPAL®, DOWANOL®, RHODAMOX® et ALKAMIDE®.

En ce qui concerne les acides carboxyliques, on peut utiliser notamment les acides mono- ou dicarboxyliques aliphatiques et parmi ceux-ci plus particulièrement les acides saturés. On peut utiliser aussi des acides gras et plus particulièrement les acides gras saturés. On peut citer ainsi notamment les acides formique, acétique, proprionique, butyrique, isobutyrique, valérique, caproïque, caprylique, caprique, laurique, myristique, palmitique. Comme acides dicarboxyliques, on peut mentionner les acides oxalique, malonique, succinique, glutarique, adipique, pimélique, subérique, azélaïque et sébacique.

Les sels des acides carboxyliques peuvent aussi être utilisés, notamment les sels ammoniacaux.

A titre d'exemple, on peut citer plus particulièrement l'acide laurique et le laurate d'ammonium.

Enfin, il est possible d'utiliser un tensioactif qui est choisi parmi ceux du type éthoxylats d'alcools gras carboxyméthylés.

Par produit du type éthoxylats d'alcool gras carboxyméthylés on entend les produits constitués d'alcools gras éthoxylés ou propoxylés comportant en bout de chaîne un groupement CH₂-COOH.

Ces produits peuvent répondre à la formule :

R₁-O-(CR₂R₃-CR₄R₅-O)ₙ-CH₂-COOH

dans laquelle R₁ désigne une chaîne carbonée, saturée ou insaturée, dont la longueur est généralement d'au plus 22 atomes de carbone, de préférence d'au moins 12 atomes de carbone; R₂, R₃, R₄ et R₅ peuvent être identiques et représenter l'hydrogène ou encore R₂ peut représenter un groupe CH₃ et R₃, R₄ et R₅ représentent l'hydrogène; n est un nombre entier non nul pouvant aller jusqu'à 50 et plus particulièrement compris entre 5 et 15, ces valeurs étant incluses. On notera qu'un tensio-actif peut être constitué d'un mélange de produits de la formule ci-dessus pour lesquels R₁ peut être saturé et insaturé respectivement ou encore des produits comportant à la fois des groupements -CH₂-CH₂-O- et -C(CH₃)-CH₂-O-.

L'addition du tensio-actif peut se faire de deux manières. Il peut être ajouté directement dans la suspension de précipité issue de l'étape précédente de chauffage (b). Il peut aussi être ajouté au précipité solide après séparation de celui-ci par tout moyen connu du milieu dans lequel a eu lieu le chauffage.

La quantité de tensio-actif utilisée, exprimée en pourcentage en masse d'additif par rapport à la masse de la composition calculée en oxyde, est généralement comprise entre 5% et 100% plus particulièrement entre 15% et 60%.

Selon une autre variante avantageuse de l'invention, avant de mettre en œuvre la dernière étape du procédé (étape de calcination), on procède à un lavage du précipité après l'avoir séparé du milieu dans lequel il se trouvait en suspension. Ce lavage peut se faire à l'eau, de préférence avec de l'eau à pH basique, par exemple de l'eau ammoniaquée.

Dans une dernière étape du procédé selon l'invention, le précipité récupéré est ensuite calciné. Cette calcination permet de développer la cristallinité du produit formé et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en œuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 500 et 1000°C.

Le procédé de préparation des compositions selon un second mode de réalisation de l'invention va maintenant être décrit.

Ce procédé comprend les étapes suivantes :
- (a') on met en présence, en milieu liquide, au moins une partie du composé basique et des composés du zirconium, du cérium et
   une partie d'au moins un des composés de l'yttrium et de la terre rare; ce par quoi on obtient un précipité;
- (b') on chauffe en milieu liquide ledit précipité;
- (c') on ajoute au milieu liquide, à l'issue de l'étape (b), la partie restante du composé basique le cas échéant et la partie restante du composé de l'yttrium ou d'au moins un des composés de l'yttrium et de la terre rare;
- (d') on ajoute au précipité obtenu à l'étape précédente un additif, choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (e') on calcine le précipité ainsi obtenu.

Le procédé de ce second mode permet aussi d'obtenir plus particulièrement des compositions selon le mode de réalisation particulier décrit plus haut, c'est-à-dire celles qui présentent un gradient de concentration de l'yttrium et, éventuellement de la terre rare.

Ce procédé diffère du procédé selon le premier mode essentiellement par la manière dont on introduit l'yttrium et la terre rare. En effet, on ne met en œuvre dans la première étape (a') qu'une partie des composés d'yttrium et/ou de terre rare et non la totalité de ceux-ci ainsi que le composé basique celui-ci étant utilisé ici soit en totalité soit en partie seulement. Le reste est alors introduit à l'issue de l'étape de chauffage (b') pour précipiter la partie restante des composés d'yttrium et/ou de terre rare. On introduit aussi à ce moment la quantité restante du composé basique si celui-ci n'a pas été mis en œuvre en totalité à l'étape (a'). En fonction de la composition que l'on vise à préparer et des caractéristiques recherchées on peut parfaitement moduler l'ordre d'introduction des composés par exemple introduire tout le composé d'yttrium et qu'en partie seulement de celui de la terre rare dans l'étape (a') ou inversement ou encore qu'une partie des deux composés et le reste à l'étape (c').

A part cette différence, on comprend donc que ce qui a été dit dans la description du procédé selon le premier mode de réalisation notamment pour les étapes de précipitation (a), de chauffage (b), d'addition de l'additif (c) et de calcination (d) s'applique de même ici en particulier pour les étapes correspondantes (a'), (b'), (d') et (e').

On notera que l'invention couvre aussi une composition qui présente les proportions en oxydes de ces différents éléments données plus haut et qui est susceptible d'être obtenue par le procédé comprenant les étapes (a') (b') (c') (d') et (e') qui ont été décrites ci-dessus.

Les compositions de l'invention telles que décrites plus haut ou telles qu'obtenues par les procédés étudiés précédemment se présentent sous forme de poudres mais elles peuvent éventuellement être mises en forme pour se présenter sous forme de granulés, billes, cylindres ou nids d'abeille de dimensions variables.

Les compositions de l'invention peuvent être utilisées comme catalyseurs ou supports de catalyseur. Ainsi, l'invention concerne aussi des systèmes catalytiques comprenant les compositions de l'invention. Pour de tels systèmes, ces compositions peuvent ainsi être appliquées sur tout support utilisé habituellement dans le domaine de la catalyse, c'est à dire notamment des supports inertes thermiquement. Ce support peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

Les compositions peuvent aussi être utilisées dans des systèmes catalytiques comprenant un revêtement (wash coat) à propriétés catalytiques et à base de ces compositions, sur un substrat du type par exemple monolithe métallique ou en céramique. Le revêtement peut comporter lui aussi un support du type de ceux mentionnés plus haut. Ce revêtement est obtenu par mélange de la composition avec le support de manière à former une suspension qui peut être ensuite déposée sur le substrat.

Ces systèmes catalytiques et plus particulièrement les compositions de l'invention peuvent trouver de très nombreuses applications. Ils sont ainsi particulièrement bien adaptés à, et donc utilisable dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion, l'oxydation catalytique des suies émises par les moteurs à combustion interne comme les moteurs diesel ou essence fonctionnant en régime pauvre. Les systèmes catalytiques et les compositions de l'invention peuvent enfin être utilisés comme pièges à NOx ou pour favoriser la réduction des NOx même en milieu oxydant.

Dans le cas de ces utilisations en catalyse, les compositions de l'invention sont employées en combinaison avec des métaux précieux, elles jouent ainsi le rôle de support pour ces métaux. La nature de ces métaux et les techniques d'incorporation de ceux-ci dans les compositions supports sont bien connues de l'homme du métier. Par exemple, les métaux peuvent être le platine, le rhodium, le palladium ou l'iridium, ils peuvent notamment être incorporés aux compositions par imprégnation.

Parmi les utilisations citées, le traitement des gaz d'échappement des moteurs à combustion interne (catalyse post combustion automobile) constitue une application particulièrement intéressante. De ce fait, l'invention concerne aussi un procédé de traitement des gaz d'échappement des moteurs à combustion interne qui est caractérisé en ce qu'on utilise à titre de catalyseur un système catalytique tel que décrit ci-dessus ou une composition selon l'invention et telle que décrite précédemment.

Des exemples vont maintenant être donnés.

Dans ces exemples, la mesure du taux de réductibilité est faite dans les conditions suivantes.

### Taux de réductibilité

Le taux de réductibilité du cérium est mesuré en effectuant une réduction en température programmée sur un appareil Micromeritics Autochem II. Cet appareil permet de mesurer la consommation d'hydrogène d'une composition selon l'invention en fonction de la température et d'en déduire le taux de réduction du cérium.

Plus précisément, on utilise l'hydrogène comme gaz réducteur à 10% en volume dans l'argon avec un débit de 30 ml/mn. Le protocole expérimental consiste à peser 200 mg de l'échantillon dans un récipient préalablement taré. L'échantillon est ensuite introduit dans une cellule en quartz contenant dans le fond de la laine de quartz. L'échantillon est positionné dans le four de l'appareil de mesure. Le programme de température est le suivant :
- oxydation : montée en température jusqu'à 400°C avec une rampe de montée à 20°C/mn sous O₂ à 5%vol dans He;
- palier de 30 mn puis descente à 50°C;
- palier 10mn;
- réduction : montée en température jusqu'à 800°C avec une rampe de montée à 10°C/mn sous H₂ à 10 %vol dans Ar; palier de 10mn;
- balayage sous Ar à 900°C pendant 10mn avant oxydation de l'échantillon et retour à T ambiante.

Lors de ce programme, la température de l'échantillon est mesurée à l'aide d'un thermocouple placé au niveau de l'échantillon. La consommation d'hydrogène lors de la phase de réduction est déduite grâce à la calibration de la variation de la conductivité thermique du flux gazeux mesurée en sortie de la cellule à l'aide d'un détecteur de conductivité thermique (TCD).

Le taux de réduction du cérium est calculé à partir de la consommation d'hydrogène mesurée entre 100°C et 800°C.

### EXEMPLE 1

Cet exemple concerne une composition à 83% de zirconium, 5% de cérium, 2% de lanthane 5% d'yttrium et 5% de néodyme, ces proportions étant exprimées en pourcentages massiques des oxydes ZrO₂, CeO₂, La₂O₃, Y₂O₃ et Nd₂O₃.

Dans un bécher agité, on introduit 313 ml de nitrate de zirconium (266 g/l en ZrO₂), 19.7 ml de nitrate de cérium, 4.4 ml de nitrate de lanthane (456 g/l en La₂O₃), 13.1 ml de nitrate d'yttrium (382 g/l en Y₂O₃) et 9.5 ml de nitrate de néodyme (524 g/l en Nd₂O₃). On complète ensuite avec de l'eau distillée de façon à obtenir 1 litre d'une solution de nitrates.

Dans un réacteur agité, on introduit 203 ml d'une solution d'ammoniaque (12 mol/l) et on complète ensuite avec de l'eau distillée de façon à obtenir un volume total de 1 litre.

La solution de nitrates est introduite dans le réacteur sous agitation constante.

La solution obtenue est placée dans un autoclave en acier inoxydable équipé d'un mobile d'agitation. La température du milieu est portée à 150°C pendant 2 heures sous agitation.

On ajoute à la suspension ainsi obtenue 33 grammes d'acide laurique. La suspension est maintenue sous agitation pendant 1 heure.

La suspension est alors filtrée sur Büchner, puis on ajoute sur le précipité filtré de l'eau ammoniaquée à raison d'une fois le volume des eaux-mères de filtration. Le produit obtenu est ensuite porté à 700°C pendant 4 heures en palier.

### EXEMPLES 2 A 12

Sauf indication contraire ci-dessous, on procède de la même façon que dans l'exemple 1. Pour l'exemple 8, on part d'une solution B diluée contenant le nitrate de néodyme et d'une solution A diluée contenant l'ensemble des autres constituants. La solution B est ajoutée a la solution d'ammoniaque après la solution A puis l'ensemble est chauffé comme dans l'exemple 1. Pour l'exemple 9, la solution B contient le nitrate d'yttrium. Pour l'exemple 10, la solution B contient le nitrate d'yttrium et le nitrate de néodyme. Pour l'exemple 6, la solution de nitrate de praséodyme présente une concentration de 500 g/l en Pr₆O₁₁.

On trouvera dans le tableau 1 ci-dessous les volumes de différentes solutions de réactif utilisées pour la préparation des compositions des exemples. Le tableau 2 donne les teneurs en oxydes de différentes compositions obtenues à l'issue de ces préparations. Le tableau 3 indique les valeurs de surface de ces mêmes compositions et le tableau 4 leurs propriétés de réductibilité après une calcination à 1000°C pendant 4 heures.

Les profils de réductibilité établis lors de la mesure du taux de réductibilité selon la méthode donnée plus haut pour ces oxydes montrent des pics à basse température ce qui signifie que ces oxydes présentent une fraction de cérium réductible à basse température. Ainsi, la température à laquelle cette première réduction intervient est située entre 150 et 230°C. L'aire correspondant à ce pic équivaut à entre 3 et 15% de l'aire totale sous la courbe de réductibilité. Ceci signifie que la fraction de cérium réductible à basse température représente entre 3 et 15% du cérium total lorsque la réductibilité est de 100%.

Afin de bien vérifier que ces pics ne sont pas dus à des impuretés présentes à la surface de l'oxyde, qui se réduisent lors du traitement effectué lors de la mesure de réductibilité, ce qui est parfois le cas, des mesures de réductibilité ont été effectuées après une précalcination sous air in-situ de l'échantillon à 800°C. Ce prétraitement permet d'éliminer toutes les impuretés présentes à la surface de l'échantillon. Les pics à basse température subsistent après prétraitement, ce qui signifie que ce phénomène correspond bien à une réduction du cérium.

Ces résultats montrent que les compositions de l'invention commencent à présenter des propriétés d'oxydo-réduction dès les basses températures, notamment dans une gamme de température située entre 150°C et 230°C.

**Tableau 1**

| Quantités de réactifs utilisées exprimée en volume (ml) des solutions des sels des différents éléments | | | | | | | |
|---|---|---|---|---|---|---|---|
| Exemple | V Zr | V Ce | V La | V Y | V Nd | V Pr | V ammoniaque |
| 1 | 313 | 19,7 | 4,4 | 13,1 | 9,5 | - | 203 |
| 2 | 275 | 19,7 | 4,4 | 13,1 | 28,6 | - | 204 |
| 3 | 256 | 19,7 | 4,4 | 52,4 | 9,5 | - | 221 |
| 4 | 218 | 19,7 | 4,4 | 52,4 | 28,6 | - | 222 |
| 5 | 266 | 19,7 | 4,4 | 32,4 | 19,1 | - | 212 |
| 6 | 301 | 19,7 | - | 26,2 | - | 10,0 | 208 |
| 7 | 294 | 39,4 | 4,4 | 13,1 | 9,5 | - | 208 |
| 8 | 282 | 39,4 | 4,4 | 20,9 | 9,5 | - | 211 |
| 9 | 313 | 39,4 | - | 18,3 | - | - | 209 |
| 10 | 271 | 39,4 | - | 20,9 | 19,1 | - | 212 |
| 11 | 256 | 39,4 | 4,4 | 13,1 | 28,6 | - | 210 |
| 12 | 275 | 59,1 | 4,4 | 13,1 | 9,5 | - | 213 |

**Tableau 2**

| Teneurs exprimées en oxydes des différents éléments | | | | | | |
|---|---|---|---|---|---|---|
| Exemple | %Zr | %Ce | %La | %Y | %Nd | %Pr |
| 1 | 83 | 5 | 2 | 5 | 5 | - |
| 2 | 73 | 5 | 2 | 5 | 15 | - |
| 3 | 68 | 5 | 2 | 20 | 5 | - |
| 4 | 58 | 5 | 2 | 20 | 15 | - |
| 5 | 70.5 | 5 | 2 | 12.5 | 10 | - |
| 6 | 80 | 5 | - | 10 | - | 5 |
| 7 | 78 | 10 | 2 | 5 | 5 | - |
| 8 | 75 | 10 | 2 | 8 | 5 | - |
| 9 | 83 | 10 | - | 7 | - | - |
| 10 | 72 | 10 | - | 8 | 10 | - |
| 11 | 68 | 10 | 2 | 5 | 15 | - |
| 12 | 73 | 15 | 2 | 5 | 5 | - |

L'exemple 9 ne fait pas partie de l'invention.

**Tableau 3**

| Surfaces spécifiques en m²/g | | | |
|---|---|---|---|
| Exemple | 4h/900°C | 4h/1000°C | 4h/1100°C |
| 1 | 67 | 47 | 23 |
| 2 | 80 | 51 | 22 |
| 3 | 71 | 51 | 28 |
| 4 | 70 | 50 | 26 |
| 5 | 80 | 53 | 23 |
| 6 | 60 | 45 | 20 |
| 7 | 70 | 47 | 22 |
| 8 | 64 | 47 | 27 |
| 9 | 52 | 33 | 15 |
| 10 | 64 | 49 | 27 |
| 11 | 80 | 53 | 22 |
| 12 | 71 | 48 | 21 |

**Tableau 4**

| Propriétés de réductibilité | | |
|---|---|---|
| Exemple | Température maximale de réductibilité à 1000°C | Taux de réductibilité à 1000°C |
| 1 | 516 | 100 |
| 2 | 508 | 100 |
| 3 | 515 | 100 |
| 4 | 534 | 100 |
| 5 | 514 | 100 |
| 6 | 526 | 100 |
| 7 | 534 | 100 |
| 8 | 530 | 98 |
| 9 | 544 | 99 |
| 10 | 535 | 93 |
| 11 | 526 | 90 |
| 12 | 547 | 94 |

### EXEMPLES 13 et 14

On prépare deux oxydes de composition ZrO₂/CeO₂/Y₂O₃/Nd₂O₃ 75/10/5/10. L'exemple 13 est réalisé suivant le mode opératoire de l'exemple 1. Pour l'exemple 14 on part d'une solution B diluée contenant les nitrates de néodyme et d'yttrium et d'une solution A diluée contenant l'ensemble des autres constituants. La solution B est ajoutée a la solution d'ammoniaque après la solution A puis l'ensemble est chauffé comme dans l'exemple 1.

Un test de lixiviation en acide nitrique dilué permet de comparer la teneur en yttrium à la surface des oxydes préparés suivant ces deux méthodes. Ce test est réalisé de la façon suivante : on disperse sous agitation 1 gramme d'oxyde dans 10 ml d'une solution contenant 0,1 mol/l d'acide nitrique. Après agitation pendant 2 heures à 40°C, on filtre la suspension. L'analyse du filtrat par technique ICP permet de déterminer les quantités d'yttrium récupérées. Pour déterminer les fractions d'yttrium récupérées, on divise respectivement ces valeurs par la quantité d'yttrium présent dans la prise d'essai d'oxyde. Les résultats obtenus pour les exemples 13 et 14 sont présentés dans le tableau 5 suivant :

**Tableau 5**

| | Fraction d'yttrium récupérée (%) |
|---|---|
| Exemple 14 | 5 |
| Exemple 15 | 19 |

Pour caractériser les phases cristallines présentes dans les échantillons, on effectue une analyse de diffraction des rayons X. Les analyses sont effectuées sur poudre à l'aide d'un diffractomètre Panalytical équipé d'un détecteur multicanal de type X'Celerator et d'un monochromateur Kβ/Kα. Les données sont collectées en 20 minutes entre 2θ = 20 et 2θ = 100° avec un pas de 0,017 mm. L'ensemble des échantillons se présentent sous la forme d'une phase très majoritaire caractéristique d'une solution solide de symétrie cubique ou tétragonale. En particulier, on ne détecte pas la présence d'oxydes de terres rares seuls, ce qui traduit l'incorporation des terres rares (La, Y, Nd et/ou Pr) dans la matrice Ce-Zr.

## Revendications

1. Composition constituée d'oxydes de zirconium, de cérium, d'yttrium et d'au moins un oxyde d'une terre rare choisie parmi le lanthane, le néodyme et le praséodyme, **caractérisée par** les proportions suivantes de ces oxydes, exprimées en masse :
▪ la proportion en oxyde de cérium est comprise entre 3% et 15% ;
▪ la proportion en oxyde d'yttrium est d'au moins 3% et elle est :
▪ d'au plus 6% si la proportion en oxyde de cérium est comprise entre 12% exclu et 15% inclus ;
▪ d'au plus 10% si la proportion en oxyde de cérium est comprise entre 7% exclu et 12% inclus ;
▪ d'au plus 30% si la proportion en oxyde de cérium est comprise entre 3 et 7% inclus ;
▪ la proportion de l'oxyde de ladite terre rare choisie parmi le lanthane, le néodyme et le praséodyme est ainsi définie :
▪ elle est d'au moins 1% ;
▪ elle est d'au plus 10% si la proportion en oxyde de cérium est comprise entre 12% exclu et 15% inclus ;
▪ elle est d'au plus 18% si la proportion en oxyde de cérium est comprise entre 7% exclu et 12% inclus ;
▪ la proportion totale en oxyde d'yttrium et en oxyde de la terre rare choisie parmi le lanthane, le néodyme et le praséodyme est d'au plus 30% si la proportion en oxyde de cérium est comprise entre 3 et 7% inclus ;
▪ le complément en oxyde de zirconium ;
ainsi que par une surface spécifique d'au moins 40 m²/g après calcination 4 heures à 1000°C ;
ladite composition présentant une phase majoritaire de symétrie cubique ou quadratique ou bien se présentant sous la forme d'une solution solide pure des éléments cérium, yttrium et terre rare dans l'oxyde de zirconium.

2. Composition selon la revendication 1, **caractérisée en ce que** la teneur en yttrium est d'au moins 5%, cette teneur étant donnée en masse d'oxyde.

3. Composition selon l'une des revendications précédentes **caractérisée en ce qu'**elle présente une surface spécifique d'au moins 20 m²/g après calcination 4 heures à 1100°C.

4. Système catalytique, **caractérisé en ce qu'**il comprend un revêtement (wash coat) à propriétés catalytiques et à base d'une composition selon l'une des revendications 1 à 3 sur un substrat de type monolithe métallique ou en céramique.

5. Procédé de traitement des gaz d'échappement des moteurs à combustion interne, **caractérisé en ce qu'**on utilise à titre de catalyseur, un système catalytique selon la revendication 4 ou une composition selon l'une des revendications 1 à 3.

## Patentansprüche

1. Zusammensetzung, bestehend aus Oxiden von Zirconium, Cer, Yttrium und mindestens einem Oxid eines Seltenerdmetalls, das aus Lanthan, Neodym und Praseodym ausgewählt ist, **gekennzeichnet durch** die folgenden Gewichtsanteile dieser Oxide:
▪ der Anteil an Ceroxid liegt zwischen 3 % und 15 %;
▪ der Anteil an Yttriumoxid beträgt mindestens 3 % und
▪ höchstens 6 %, wenn der Anteil an Ceroxid zwischen 12 % exklusive und 15 % inklusive liegt;
▪ höchstens 10 %, wenn der Anteil an Ceroxid zwischen 7 % exklusive und 12 % inklusive liegt;
▪ höchstens 30 %, wenn der Anteil an Ceroxid zwischen 3 und 7 % inklusive liegt;
▪ wobei der Anteil an dem Oxid des Seltenerdmetalls, das aus Lanthan, Neodym und Praseodym ausgewählt ist, so definiert ist:
▪ er beträgt mindestens 1 %;
▪ er beträgt höchstens 10 %, wenn der Anteil an Ceroxid zwischen 12 % exklusive und 15 % inklusive liegt;
▪ er beträgt höchstens 18 %, wenn der Anteil an Ceroxid zwischen 7 % exklusive und 12 % inklusive liegt;
▪ der Gesamtanteil an Yttriumoxid und Oxid des Seltenerdmetalls, das aus Lanthan, Neodym und Praseodym ausgewählt ist, beträgt mehr als 30 %, wenn der Anteil an Ceroxid zwischen 3 % und 7 % inklusive liegt;
▪ Rest Zirconiumoxid;
sowie durch eine spezifische Oberfläche von mindestens 40 m²/g nach 4 Stunden Calcinierung bei 1000 °C;
wobei die Zusammensetzung eine Hauptphase mit kubischer oder quadratischer Symmetrie aufweist oder auch in Form einer reinen festen Lösung der Elemente Cer, Yttrium und Seltenerdmetall in dem Zirconiumoxid vorliegt.

2. Zusammensetzung nach Anspruch 1, **dadurch gekennzeichnet, dass** der Yttriumgehalt mindestens 5 % beträgt, wobei dieser Gehalt als Oxidmasse angegeben ist.

3. Zusammensetzung nach einem der vorhergehenden Ansprüche, **dadurch gekennzeichnet, dass** er nach 4 Stunden Calcinierung bei 1100 °C eine spezifische Oberfläche von mindestens 20 m²/g aufweist.

4. Katalytisches System, **dadurch gekennzeichnet, dass** es eine Beschichtung (Washcoat) mit katalytischen Eigenschaften auf der Basis einer Zusammensetzung nach einem der Ansprüche 1 bis 3 auf einem Substrat vom Typ Metall- oder Keramik-Monolith umfasst.

5. Verfahren zur Behandlung von Abgasen von Verbrennungsmotoren, **dadurch gekennzeichnet, dass** man als Katalysator ein katalytisches System nach Anspruch 4 oder eine Zusammensetzung nach einem der Ansprüche 1 bis 3 verwendet.

## Claims

1. Composition consisting of zirconium oxide, cerium oxide, yttrium oxide and at least one oxide of a rare earth metal selected from lanthanum, neodymium and praseodymium, **characterized by** the following proportions of these oxides, expressed by weight:
▪ the proportion of cerium oxide is between 3% and 15%;
▪ the proportion of yttrium oxide is at least 3% and it is:
▪ at most 6% if the proportion of cerium oxide is between 12% excluded and 15% included;
▪ at most 10% if the proportion of cerium oxide is between 7% excluded and 12% included;
▪ at most 30% if the proportion of cerium oxide is between 3% and 7% included;
▪ the proportion of the oxide of said rare earth metal selected from lanthanum, neodymium and praseodymium is thus defined:
▪ it is at least 1%;
▪ it is at most 10% if the proportion of cerium oxide is between 12% excluded and 15% included;
▪ it is at most 18% if the proportion of cerium oxide is between 7% excluded and 12% included;
▪ the total proportion of yttrium oxide and of oxide of the rare earth metal selected from lanthanum, neodymium and praseodymium is at most 30% if the proportion of cerium oxide is between 3% and 7% included;
▪ the remainder being made up of zirconium oxide;
and also by a specific surface area of at least 40 m²/g after calcining for 4 hours at 1000°C;
said composition having a major phase of cubic or quadratic symmetry or else being in the form of a pure solid solution of the elements cerium, yttrium and rare earth metal in the zirconium oxide.

2. Composition according to Claim 1, **characterized in that** the yttrium content is at least 5%, this content being given by weight of oxide.

3. Composition according to either of the preceding claims, **characterized in that** it has a specific surface area of at least 20 m²/g after calcining for 4 hours at 1100°C.

4. Catalytic system, **characterized in that** it comprises a washcoat with catalytic properties and based on a composition according to one of Claims 1 to 3 on a substrate of metal monolith type or of ceramic.

5. Process for treating exhaust gases from internal combustion engines, **characterized in that** a catalytic system according to Claim 4 or a composition according to one of Claims 1 to 3 is used as catalyst.
